# EUROPEAN PATENT SPECIFICATION

(11) **EP 2 916 488 B1**
(45) Date of publication and mention of the grant of the patent: **10.04.2019**
(21) Application number: 13851276.9
(22) Date of filing: 27.08.2013
(51) Int. Cl.: H04L 12/24, G06F 8/656, G06F 9/445

(54) **METHOD AND SYSTEM FOR UPGRADING SOFTWARE OF DISTRIBUTED COMMUNICATION DEVICE**
VERFAHREN UND SYSTEM ZUR AUFRÜSTUNG EINER SOFTWARE FÜR EINE VERTEILTE KOMMUNIKATIONSVORRICHTUNG
PROCÉDÉ ET SYSTÈME DE MISE À NIVEAU D'UN LOGICIEL DE DISPOSITIF DE COMMUNICATION RÉPARTI

(30) Priority: 01.11.2012 CN 201210428526
(43) Date of publication of application: 09.09.2015
(73) Proprietor: ZTE Corporation, Shenzhen, Guangdong 518057 (CN)
(72) Inventor: ZHAO, Zhenfu, Shenzhen Guangdong 518057 (CN); CHEN, Wei, Shenzhen Guangdong 518057 (CN)
(74) Representative: Lavoix
(86) International application number: PCT/CN2013/082411
(87) International publication number: WO 2014/067330

(56) References cited:
- EP-A2- 2 042 987
- CN-A- 101 383 724
- CN-A- 101 383 724
- CN-A- 102 081 540
- CN-A- 102 937 925
- US-A1- 2012 023 309
- US-A1- 2012 072 894
- US-B1- 7 177 919

## Description

### TECHNICAL FIELD

The disclosure relates to the technical field of communications, and in particular to a software upgrading method and system for a distributed communication device.

### BACKGROUND

With an increasing demand for accessing a network to acquire information at any time in any places, various wired and wireless terminals spring up and are connected to the network. In order to improve user experiences, network devices for bearing user network services in a network become increasingly important; if an anomaly arises in a network device, it may affect user access experiences, resulting in user churn, and may even affect operation of an enterprise's electronic commerce network, resulting in severe economic losses.

In network communication devices operating on a network, for performance and expandability consideration, many of the devices are distributed communication devices implemented on the basis of a multiprocessing operation system. In a communication device using a multiprocessing operation system, multiple service processes are used to cooperatively implement functions of the communication device such as routing learning and data forwarding. The communication device interacts with external devices, learns network route, and calculates and generates an optimum route table for use in a forwarding plane. Then the optimum route table is issued to the forwarding plane, which performs routing and forwarding of data according to the optimum route table.

During operation of the network device, since there may be malfunctions or newly-added functional features in the software, it is inevitable to encounter various software upgradings for the network device. However, there are so far no effective methods that can avoid service interruption arisen during a software upgrading of the network device.

CN 101 383 724 A discloses a method of upgrading network elements, in which a switched master OMU sends a command for resetting a line card, which will load programs and data from the switched master OMU once being reset.

EP 2 042 987 A2 discloses a method for a metadata-driven upgrade of a network element. Specifically, new software is installed on active controller and backup controller respective at steps and, and then the step of synchronization and switching follows.

US 2012/023309 A1 discloses a network device in which a line card comprises two partitions, i.e., P1 which is active and P2 which is standby. In this context, partition P1 and partition P2 operate in a redundant manner and exists concurrently.

### SUMMARY

In view of the above, embodiments of the disclosure are intended to provide a software upgrading method and system for a distributed communication device, which can avoid unnecessary service interruption arisen during a software upgrading, thus improving reliability and availability of services and improving user experiences.

To this end, the technical solutions of embodiments of the disclosure are implemented as follows.

A software upgrading method for a distributed communication device, applied to a software upgrading system for the distributed communication device that includes an active main control unit, a standby main control unit and a line card, the method including:
the active main control unit notifies the standby main control unit to launch a new version of a software and run said new version of the software in a standby state, and performs data and data state recovery on said new version of the software on the standby main control unit through an old version of the software on the active main control unit;
active/standby state inversion between the active main control unit and the standby main control unit is performed, wherein the active/standby state inversion is performed such that the active main control unit being inverted to a current standby main control unit and the standby main control unit being inverted to a current active main control unit;
the line card launches a new version of a software of a control plane and of a management plane and runs said new version of the software in a standby state, and performs data and data state recovery on said new version of the software on the line card through a current active main control unit, or performs data and data state recovery on said new version of the software on the line card through an old version of the software of the control plane and of the management plane on the line card;
the line card cancels said old version of the software of the control plane and of the management plane, and runs said new version of the software of the control plane and of the management plane in an active state; and
the line card refreshes data of and a data state of a software of a forwarding plane.

In an embodiment, the step that the active main control unit notifies the standby main control unit to launch a new version of a software and run said new version of the software in a standby state, and performs data and data state recovery on said new version of the software on the standby main control unit through an old version of the software on the active main control unit may include:
the active main control unit notifies the standby main control unit to launch the new version of the software on the standby main control unit; and
the data and data state recovery is performed on said new version of the software on the standby main control unit through the old version of the software on the active main control unit based on a data recovery assembly;

In an embodiment, the step that the line card launches a new version of a software of a control plane and of a management plane and runs said new version of the software in a standby state, and performs data and data state recovery on said new version of the software on the line card through a current active main control unit, or performs data and data state recovery on said new version of the software on the line card through an old version of the software of the control plane and of the management plane on the line card may include:
after the active/standby state inversion between the active main control unit and the standby main control unit is finished, the line card launches said new version of the software of the control plane and of the management plane on the line card and runs said new version of the software in the standby state;
the data and data state recovery is performed on said new version of the software on the line card through the current active main control unit based on a data recovery assembly, or the data and data state recovery is performed on said new version of the software on the line card through the old version of the software of the control plane and of the management plane on the line card based on a data recovery assembly; and
after the data and data state recovery performed on the line card is finished, the line card cancels said old version of the software of the control plane and of the management plane, runs said new version of the software of the control plane and of the management plane in the active state, and refreshes the data of and the data state of the software of the forwarding plane.

In an embodiment, the method may further include:
after the data and data state recovery performed on the line card is finished and before the data of and the data state of the software of the forwarding plane are refreshed, the software of the forwarding plane on the line card is upgraded.

In an embodiment, the method may further include:
after the active/standby state inversion between the active main control unit and the standby main control unit is finished, said old version of the software on an original active main control unit is upgraded to the new version of the software and the new version of the software is run in the standby state.

A software upgrading system for a distributed communication device, including an active main control unit, a standby main control unit and a line card, wherein
the active main control unit is configured to notify the standby main control unit to launch a new version of a software, to perform data and data state recovery on said new version of the software on the standby main control unit through an old version of the software on the active main control unit, and to change a running state of the active main control unit to a standby state after the data and data state recovery is finished;
the standby main control unit is configured to launch said new version of the software and run the said new version of the software in a standby state, to cooperate with the active main control unit to perform the data and data state recovery on said new version of the software, and to change a running state of the standby main control unit to an active state after the data and data state recovery is finished; and
the line card is configured to, after active/standby state inversion between the active main control unit and the standby main control unit is finished, launch a new version of a software of a control plane and of a management plane on the line card and run said new version of the software in a standby state, and to perform data and data state recovery on said new version of the software on the line card through a current active main control unit, or to perform data and data state recovery on said new version of the software on the line card through an old version of the software of the control plane and of the management plane on the line card, and to, after the data and data state recovery performed on the line card is finished, cancel said old version of the software of the control plane and of the management plane, run said new version of the software of the control plane and of the management plane in the active state, and refresh data of and a data state of a software of a forwarding plane, wherein the active/standby state inversion is performed such that the active main control unit being inverted to a current standby main control unit and the standby main control unit being inverted to a current active main control unit.

In an embodiment, the active main control unit may include a first version manager and a first active standby manager, the standby main control unit may include a second version manager and a second active standby manager, and each software on the active and standby main control units may include a data recovery assembly;

Specifically, the first version manager is configured to notify the second version manager to launch the new version of the software on the standby main control unit, and to, after the data and data state recovery is finished, notify the first active standby manager to change the running state of the active main control unit to a standby state;
the second version manager is configured to launch the new version of the software on the standby main control unit, and to, after the data and data state recovery is finished, notify the second active standby manager to change the running state of the standby main control unit to the active state;
the first active standby manager is configured to perform the active/standby state inversion on the running state of the active main control unit; and
the second active standby manager is configured to perform the active/standby state inversion on the running state of the standby main control unit;
the data and data state recovery is performed on said new version of the software on the standby main control unit through the old version of the software on the active main control unit based on the data recovery assembly of the active main control unit.

In an embodiment, the line card may include a third version manager, and each software on the active and standby main control units and the line card may include a data recovery assembly;
specifically, the third version manager is configured to, after the active/standby state inversion between the active main control unit and the standby main control unit is finished, launch said new version of the software of the control plane and of the management plane on the line card and run said new version of the software in a standby state; and to, after the data and data state recovery performed on the line card is finished, cancel said old version of the software of the control plane and of the management plane, run said new version of the software of the control plane and of the management plane in the active state, and refresh the data of and the data state of the software of the forwarding plane;
the data and data state recovery is performed on said new version of the software on the line card through the current active main control unit based on the data recovery assembly of the current active main control unit, or the data and data state recovery is performed on said new version of the software on the line card through the old version of the software of the control plane and of the management plane on the line card based on the data recovery assembly of the line card.

In an embodiment, the line card may be further configured to, after the data and data state recovery performed on the line card is finished and before the data of and the data state of the software of the forwarding plane are refreshed, upgrade the software of the forwarding plane on the line card.

In an embodiment, the active main control unit may be further configured to, after the active/standby state inversion between the active main control unit and the standby main control unit is finished, upgrade said old version of the software on an original active main control unit to the new version of the software and run the new version of the software in the standby state.

In the software upgrading method and system for a distributed communication device according to embodiments of the disclosure, softwares are upgraded in sequence in the main control units and the line card, since the main control units include the active main control unit and the standby main control unit based on physical redundancy, the software is enabled to run in an active state or a standby state in the line card, thus the embodiments according to the disclosure enable new and old versions of a software to run simultaneously, and the new version of the software is enabled to replace seamlessly the old version of the software so as to enter a running state through active/standby state inversion between the active main control unit and the standby main control unit as well as control of an active/standby running state of the new and old versions of the software on the line card. In addition, in embodiments of the disclosure, the software of the control plane and of the management plane is upgraded on the line card, and the software of the forwarding plane of the line card is upgraded as required so as to avoid unnecessary service interruption arisen from the software upgrading, thus improving reliability and availability of services, avoiding severe economic loss resulted from the service interruption, and improving user experiences.

### BRIEF DESCRIPTION OF THE DRAWINGS

Fig. 1 is a flow chart of a software upgrading method for a distributed communication device according to a first embodiment of the disclosure;
Fig. 2 is a flow chart of a software upgrading method for a distributed communication device according to a second embodiment of the disclosure;
Fig. 3 is a schematic structural diagram of a software upgrading system for a distributed communication device according to a second embodiment of the disclosure;
Fig. 4 is a sequence diagram showing interaction during software upgrading of a distributed access gateway according to an embodiment of the disclosure;
Fig. 5 is a schematic diagram showing a state before software upgrading of a distributed access gateway according to an embodiment of the disclosure;
Fig. 6 is a schematic diagram showing that a main controller 2 of a distributed access gateway launches a new version of a software and performs data and data state recovery according to an embodiment of the disclosure;
Fig. 7 is a schematic diagram showing that a running state of the main controller 2 of the distributed access gateway is changed to an active state, and a new version of a software on the line card is launched to perform data and data state recovery according to an embodiment of the disclosure;
Fig. 8 is a schematic diagram showing that a line card of a distributed access gateway cancels an old version of a software according to an embodiment of the disclosure;
Fig. 9 is a schematic diagram showing that a new version of a software of a line card of a distributed access gateway enters a running state according to an embodiment of the disclosure; and
Fig. 10 is a schematic diagram showing that an old version of a software of a main controller 1 of a distributed access gateway is upgraded to a new version of the software according to an embodiment of the disclosure.

### DETAILED DESCRIPTION

In order to learn features and technical contents of embodiments of the disclosure in greater detail, the embodiments of the disclosure are elaborated below with reference to accompanying drawings which are for reference purposes only and not intended to limit the embodiments of the disclosure.

An embodiment of the disclosure discloses a software upgrading method for a distributed communication device, which is applied to a software upgrading system for the distributed communication device that includes an active main control unit, a standby main control unit and a line card, and the method includes two stages: a first stage of a software upgrading process for main control units, and a second stage of a software upgrading process for a line card.

In order to more clearly understand embodiments of the disclosure, concepts associated with embodiments of the disclosure are described as follows.

The active main control unit and the standby main control unit together are referred to as main control units and also as main processing units which take charge of system management, route calculation and the like in a communication device.

The active main control unit refers to a main processor on which softwares run in an active state and provide services to the outside.

The active main control unit refers to a main processor on which softwares run in a standby state and do not provide services to the outside, and the softwares can provide services to the outside only after being changed to the active state.

The line card takes charge of implementing services such as management of forwarded data and data forwarding.

Specifically, in practical applications, the active main control unit and the standby main control unit each can be implemented by a Central Processing Unit (CPU), a Digital Signal Processor (DSP) or a Field Programmable Gate Array (FPGA).

In an embodiment, the active main control unit may include a first version manager and a first active standby manager; the standby main control unit may include a second version manager and a second active standby manager, and each software on main control units may include a data recovery assembly; the line card may include a third version manager, and each software on the main control units and the line card may include a data recovery assembly.

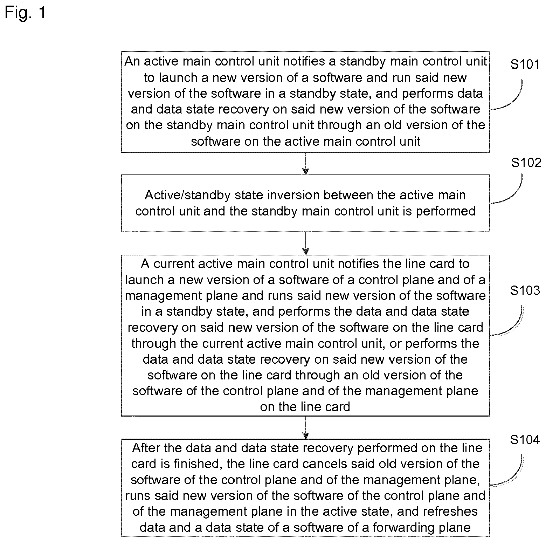

The two stages included in the software upgrading method for a distributed communication device will be described as follows respectively, as shown in Fig. 1, the method includes below steps:
step S101, an active main control unit notifies a standby main control unit to launch a new version of a software and run said new version of the software in a standby state, and performs data and data state recovery on said new version of the software on the standby main control unit through an old version of the software on the active main control unit.

Preferably, step S101 may include:
step A1, the active main control unit notifies the standby main control unit to launch the new version of the software on the standby main control unit; and
step A2, the data and data state recovery is performed on said new version of the software on the standby main control unit through the old version of the software on the active main control unit based on a data recovery assembly.

Step A1 specifically includes: the first version manager notifies the second version manager to launch the new version of the software on the standby main control unit.

Preferably, step A2 may include:
step A21, one or more communication links are established between the active main control unit and the standby main control unit through respective data recovery assemblies; and
step A22, the data and data state are synchronized to the new version of the software on the standby main control unit through the old version of the software on the active main control unit based on the data recovery assembly.

In this way, the data and data state synchronized from said new version of the software on the active main control unit are received through the new version of the software on the standby main control unit also based on the data recovery assembly.

Step S102, active/standby state inversion between the active main control unit and the standby main control unit is performed.

In this way, the standby main control unit having finished the software upgrading is enabled to enter an active running state, and the original active main control unit is enabled to enter a standby running state, on which the software is waiting to be upgraded.

Specifically, after the data and data state recovery is finished, the first version manager notifies the first active standby manager to change the running state of the active main control unit to the standby state, and the second version manager notifies the second active standby manager to change the running state of the standby main control unit to the active state.

Step S103, a current active main control unit notifies the line card to launch a new version of a software of a control plane and of a management plane and runs said new version of the software in a standby state, and performs the data and data state recovery on said new version of the software on the line card through the current active main control unit, or performs the data and data state recovery on said new version of the software on the line card through an old version of the software of the control plane and of the management plane on the line card.

Specifically, after the active/standby state inversion between the active main control unit and the standby main control unit is finished, the third version manager launches said new version of the software of the control plane and of the management plane on the line card and run said new version of the software in a standby state; and after the data and data state recovery performed on the line card is finished, cancels said old version of the software of the control plane and of the management plane, runs said new version of the software of the control plane and of the management plane in the active state, and refreshes data of and a data state of a software of a forwarding plane;
the data and data state recovery is performed on said new version of the software on the line card through the new version of the software of the current active main control unit based on a data recovery assembly, or the data and data state recovery is performed on said new version of the software on the line card through the old version of the software of the control plane and of the management plane on the line card based on the data recovery assembly.

In step S103, the processing that the data and data state recovery is performed on the new version of the software of the control plane and of the management plane on the line card through the current active main control unit includes:
step B1, one or more communication links are established between the current active main control unit and the line card based on the data recovery assembly; and
step B2, the data and data state are synchronized to the new version of the software of the control plane and of the management plane on the line card through the new version of the software on the current active main control unit based on the data recovery assembly.

Accordingly, the data and data state synchronized from the active main control unit are received through the new version of the software of the control plane and of the management plane on the line card based on the data recovery assembly.

In step S103, the processing that the data and data state recovery is performed on the new version of the software on the line card through the old version of the software of the control plane and of the management plane on the line card includes:
step C1, one or more communication links are established between the old version of the software of the control plane and of the management plane on the line card and the new version of the software on the line card; and
step C2, the data and data state are synchronized to the new version of the software on the line card through the old version of the software of the control plane and of the management plane on the line card.

Accordingly, the data and data state synchronized from the old version of the software of the control plane and of the management plane on the line card are received through the new version of the software of the control plane and of the management plane on the line card based on the data recovery assembly.

Step S104, after the data and data state recovery performed on the line card is finished, the line card cancels said old version of the software of the control plane and of the management plane, runs said new version of the software of the control plane and of the management plane in the active state, and refreshes the data of and the data state of the software of the forwarding plane.

Specifically, after the data and data state recovery performed on the line card is finished, the third version manager cancels said old version of the software of the control plane and of the management plane, runs said new version of the software of the control plane and of the management plane in the active state, and refreshes the data of and the data state of the software of the forwarding plane.

Preferably, before step S101, the method may further include:
the new version of the software is copied to a main control unit and the line card of the communication device; or the new version of the software is copied to the main control unit of the communication device, then the line card requests the main control unit for the new version of the software and upgrades it.

The main control unit herein refers to a main control unit in the active state, i.e., the active main control unit, since the standby main control unit does not provide services to the system.

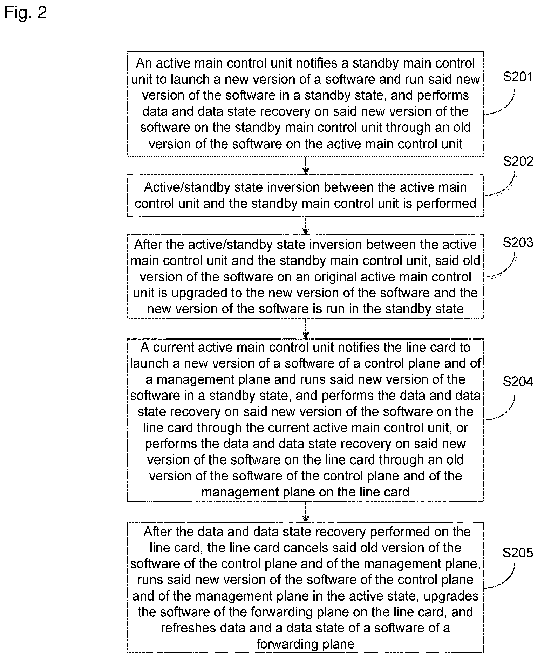

An embodiment of the disclosure discloses a software upgrading method for a distributed communication device, which is applied to a software upgrading system for the distributed communication device that includes an active main control unit, a standby main control unit and a line card, and the method includes two stages: a first stage of a software upgrading process for main control units and a second stage of a software upgrading process for a line card, as shown in Fig. 2, the method includes below steps:
step S201, an active main control unit notifies a standby main control unit to launch a new version of a software and run said new version of the software in a standby state, and performs data and data state recovery on said new version of the software on the standby main control unit through an old version of the software on the active main control unit.

Preferably, step S201 may include:
step A1: the active main control unit notifies the standby main control unit to launch the new version of the software on the standby main control unit; and
step A2, the data and data state recovery is performed on said new version of the software on the standby main control unit through the old version of the software on the active main control unit based on a data recovery assembly.

Step A1 specifically includes: the first version manager notifies the second version manager to launch the new version of the software on the standby main control unit.

Preferably, step A2 may include:
step A21, one or more communication links are established between the active main control unit and the standby main control unit through respective data recovery assemblies; and
step A22, the data and data state are synchronized to the new version of the software on the standby main control unit through the old version of the software on the active main control unit based on the data recovery assembly.

Step S202, active/standby state inversion between the active main control unit and the standby main control unit is performed.

In this way, the standby main control unit having finished the software upgrading is enabled to enter an active running state, and the original active main control unit is enabled to enter a standby running state, on which the software is waiting to be upgraded.

Specifically, after the data and data state recovery is finished, the first version manager notifies the first active standby manager to change the running state of the active main control unit to the standby state, and the second version manager notifies the second active standby manager to change the running state of the standby main control unit to the active state.

Step S203, after the active/standby state inversion between the active main control unit and the standby main control unit, said old version of the software on an original active main control unit is upgraded to the new version of the software and the new version of the software is run in the standby state.

Step S204, a current active main control unit notifies the line card to launch a new version of a software of a control plane and of a management plane and runs said new version of the software in a standby state, and performs the data and data state recovery on said new version of the software on the line card through the current active main control unit, or performs the data and data state recovery on said new version of the software on the line card through an old version of the software of the control plane and of the management plane on the line card.

Specifically, after the active/standby state inversion between the active main control unit and the standby main control unit is finished, the third version manager launches said new version of the software of the control plane and of the management plane on the line card and run said new version of the software in a standby state; and after the data and data state recovery performed on the line card is finished, cancels said old version of the software of the control plane and of the management plane, runs said new version of the software of the control plane and of the management plane in the active state, and refreshes data of and a data state of a software of a forwarding plane;
the data and data state recovery is performed on said new version of the software on the line card through the new version of the software of the current active main control unit based on a data recovery assembly, or the data and data state recovery is performed on said new version of the software on the line card through the old version of the software of the control plane and of the management plane on the line card based on the data recovery assembly.

Step S205, after the data and data state recovery performed on the line card is finished, the line card cancels said old version of the software of the control plane and of the management plane, runs said new version of the software of the control plane and of the management plane in the active state, upgrades the software of the forwarding plane on the line card, and refreshes the data of and the data state of the software of the forwarding plane.

Specifically, after the data and data state recovery performed on the line card is finished, the third version manager cancels said old version of the software of the control plane and of the management plane, runs said new version of the software of the control plane and of the management plane in the active state, upgrades the software of the forwarding plane on the line card, and refreshes the data of and the data state of the software of the forwarding plane.

The process of upgrading a software of the forwarding plane by the third version manager on the line card is similar to the process of upgrading the software of the control plane and of the management plane on the line card, the reason why the upgrading of the software of the forwarding plane comes last lies in that the function of the forwarding plane affects directly service operation of the communication device, upgrading firstly the software of the control plane and of the management plane on the line card will not result in interruption of the service; the process of upgrading the software of the forwarding plane also needs to follow the below procedures: an old version of the software of the forwarding plane is cancelled and a new version of the software of the forwarding plane is launched, a data and data state recovery is performed on the new version of the software of the forwarding plane on the line card through the new version of the software on the current active main control unit, the data of and the data state of the new version of the software of the forwarding plane are refreshed, so as to validate the entries of the forwarding table of the new version of the software of the forwarding plane. Time taken by upgrading the software of the forwarding plane is very short, which has little effect on service operation.

Preferably, before the step S201, the method may further include:
the new version of the software is copied to a main control unit and the line card of the communication device; or the new version of the software is copied to the main control unit of the communication device, then the line card requests the main control unit for the new version of the software.

The main control unit herein refers to a main control unit in the active state, i.e., the active main control unit, since the standby main control unit does not provide services to the system.

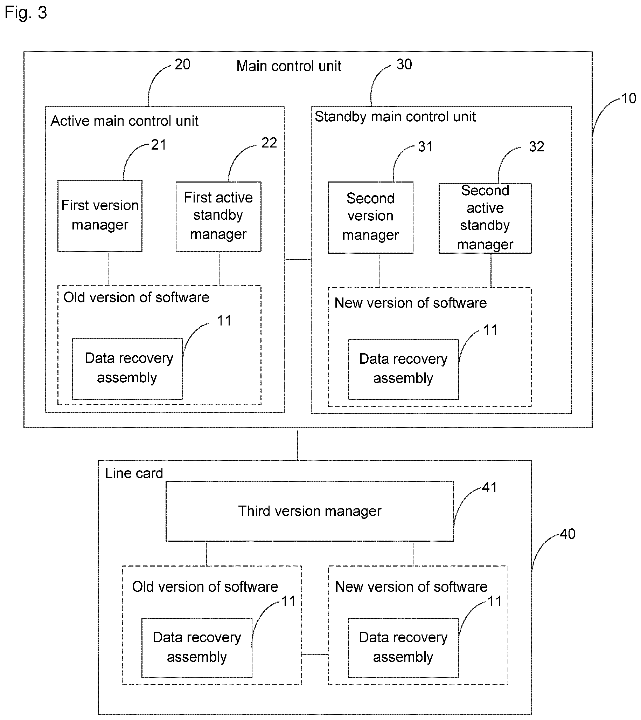

Embodiments of the disclosure further disclose a software upgrading system for a distributed communication device, as shown in Fig. 3, the system includes an active main control unit 10 including a standby main control unit 20 and a line card 30 based on physical redundancy;

the active main control unit 20 is configured to notify the standby main control unit to launch a new version of a software, to perform data and data state recovery on said new version of the software on the standby main control unit 30 through an old version of the software on the active main control unit 20, and to change a running state of the active main control unit to a standby state after the data and data state recovery is finished.

The standby main control unit 30 is configured to launch said new version of the software and run the said new version of the software in a standby state, to cooperate with the active main control unit 20 to perform the data and data state recovery on said new version of the software, and to change a running state of the standby main control unit to an active state after the data and data state recovery is finished.

Preferably, the active main control unit 20 may include a first version manager 21 and a first active standby manager 22, the standby main control unit 30 may include a second version manager 31 and a second active standby manager 32, and each software on the active and standby main control units may include a data recovery assembly 11;
the first version manager 21 is configured to notify the second version manager 31 to launch the new version of the software on the standby main control unit 30, and to, after the data and data state recovery is finished, notify the first active standby manager 22 to change the running state of the active main control unit 22 to a standby state so that the old version of the software enters a standby running state and waits to be upgraded;
the data recovery assembly 11 is configured to perform, in the old version of the software on the active main control unit 20, the data and data state recovery on said new version of the software on the standby main control unit 30;
the second version manager 31 is configured to launch the new version of the software on the standby main control unit 30, and to, after the data and data state recovery is finished, notify the second active standby manager 32 to change the running state of the standby main control unit 30 to the active state;
the first active standby manager 22 is configured to perform the active/standby state inversion on the running state of the active main control unit 20; and
the second active standby manager 32 is configured to perform the active/standby state inversion on the running state of the standby main control unit 30.

The line card 40 is configured to, after active/standby state inversion between the active main control unit 20 and the standby main control unit 30 is finished, launch a new version of a software of a control plane and of a management plane on the line card and run said new version of the software in a standby state, and to perform data and data state recovery on said new version of the software on the line card through a current active main control unit, or to perform data and data state recovery on said new version of the software on the line card through an old version of the software of the control plane and of the management plane on the line card, and to, after the data and data state recovery performed on the line card is finished, cancel said old version of the software of the control plane and of the management plane, run said new version of the software of the control plane and of the management plane in the active state, and refresh data of and a data state of a software of a forwarding plane.

Preferably, the line card 40 may include a third version manager 41, and each software on the active and standby main control units and the line card may include a data recovery assembly.

The third version manager 41 is configured to, after the active/standby state inversion between the active main control unit 20 and the standby main control unit 30 is finished, launch said new version of the software of the control plane and of the management plane on the line card and run said new version of the software in a standby state; and to, after the data and data state recovery performed on the line card 40 is finished, cancel said old version of the software of the control plane and of the management plane, run said new version of the software of the control plane and of the management plane in the active state, and refresh the data of and the data state of the software of the forwarding plane;
the data recovery assembly 11 is configured to perform, in the old version of the software on the active main control unit 20, the data and data state recovery i on said new version of the software on the line card 40, or the data and data state recovery is performed on said new version of the software on the line card 40 through the old version of the software of the control plane and of the management plane on the line card 40 based on the data recovery assembly 11.

An embodiment of the disclosure further discloses a software upgrading system for a distributed communication device, the software upgrading system for a distributed communication device is roughly the same as the software upgrading system for a distributed communication device shown in Fig. 3, and the difference lies in that in the system according to the embodiment,

the active main control unit 20 is further configured to, after the active/standby state inversion between the active main control unit 20 and the standby main control unit 30 is finished, upgrade said old version of the software on an original active main control unit 20 to the new version of the software and run the new version of the software in the standby state.

In addition, the line card 40 is further configured to, after the data and data state recovery performed on the line card 40 is finished and before the data of and the data state of the software of the forwarding plane are refreshed, upgrade the software of the forwarding plane on the line card 40.

Preferably, the process of upgrading a software of the forwarding plane by the third version manager 41 on the line card 40 is similar to the process of upgrading the software of the control plane and of the management plane on the line card 40, the reason why the upgrading of the software of the forwarding plane comes last lies in that the function of the forwarding plane affects directly service operation of the communication device, upgrading firstly the software of the control plane and of the management plane on the line card 40 will not result in interruption of the service; the process of upgrading the software of the forwarding plane also needs to follow the below procedures: an old version of the software of the forwarding plane is cancelled and a new version of the software of the forwarding plane is launched, a data and data state recovery is performed on the new version of the software of the forwarding plane on the line card 40 through the new version of the software on the current active main control unit 20, the data of and the data state of the new version of the software of the forwarding plane are refreshed, so as to validate the entries of the forwarding table of the new version of the software of the forwarding plane. Time taken by upgrading the software of the forwarding plane is very short, which has little effect on service operation.

Based on the above embodiments, an application example of the disclosure is now described, the application scenario and implementation process of the application example are as follows.

Application scenario: upgrading of a software of an access gateway.

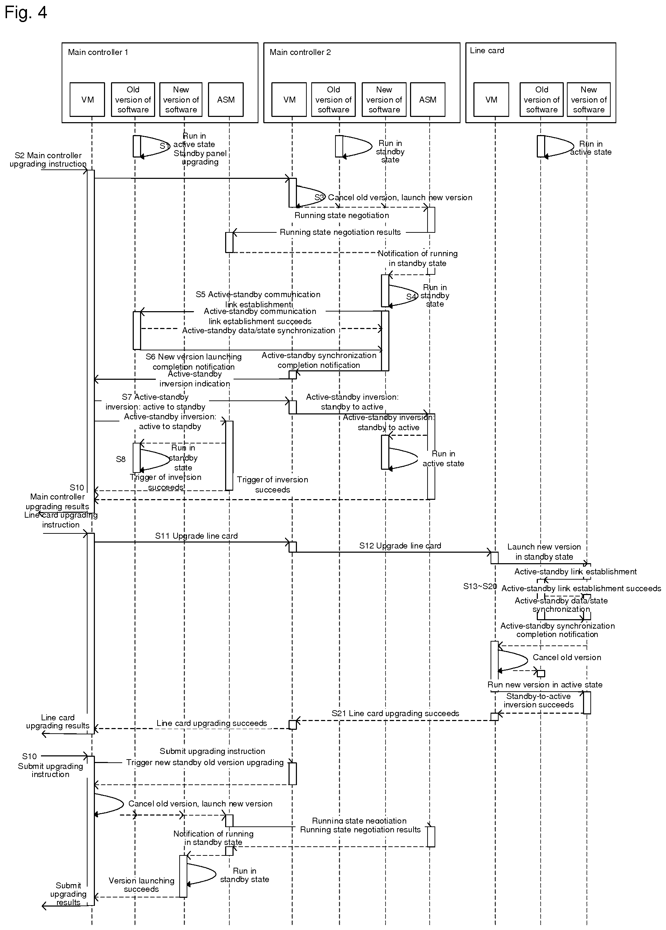

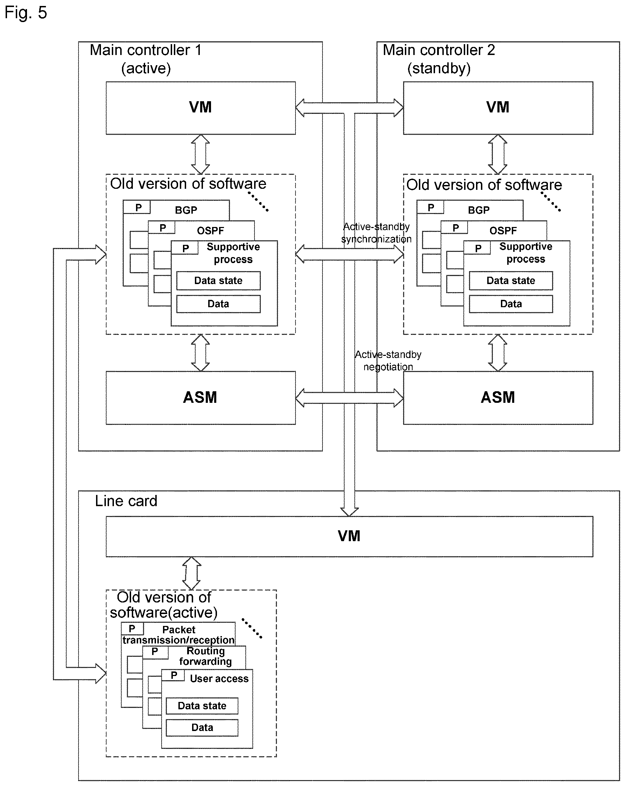

Fig. 4 is a sequence diagram showing interaction during software upgrading of a distributed access gateway, Fig. 5 to Fig. 10 show various states during the software upgrading of the distributed access gateway; the access gateway in the drawings is a distributed communication device for implementing access of users to a network, and for high reliability and high availability consideration, the access gateway is configured with active/standby main control panels; Fig. 5 shows a state before upgrading of the software of the distributed access gateway, a processing unit on the active control panel is a main controller 1 while a processing unit on the standby main control panel is a main controller 2. Furthermore, 4 line cards are configured in order to implement access of users and forwarding processing. There are 80 processes running on the main control unit, such as a supportive process, a Border Gateway Protocol (BGP) process, a Routing Information Protocol (RIP) process, an Open Shortest Path First (OSPF) process, a Forward Information Base (FIB) process and the like. There are 30 processes running on the line card, such as a packet transmission/reception process, a routing forwarding process, a user access process and the like. Since running software versions may have malfunctions, services may be interrupted randomly. Thus it is required to consider upgrading the version of a software so as to overcome device malfunctions. The four line cards of the access gateway are upgraded in a line card by line card way. That is to say, each line card is upgraded in sequence, line card 1 is upgraded first, then line card 2 is upgraded, and then line card 3 is upgraded, finally line card 4 is upgraded.

The upgrading of the version of the software of the access gateway relates to below assemblies: an old version of the software, a new version of the software, a version manager, and an active standby manager. Specifically, the old version of the software and the new version of the software implement a same function, the version manager takes charge of upgrading of the version of a software, failure rollback and the like, the active standby manager takes charge of active/standby management of new/old versions of a software, and triggering active/standby state inversion of the new version of the software after data and data state recovery from the old version to the new version of the software, so that the new version of the software can replace seamlessly the old version of the software, thereby implementing software upgrading without service interruption.

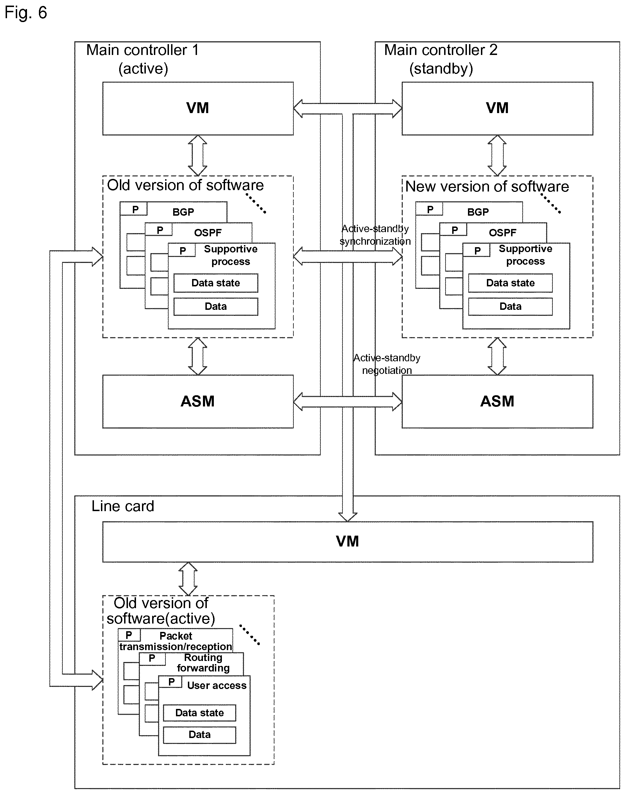

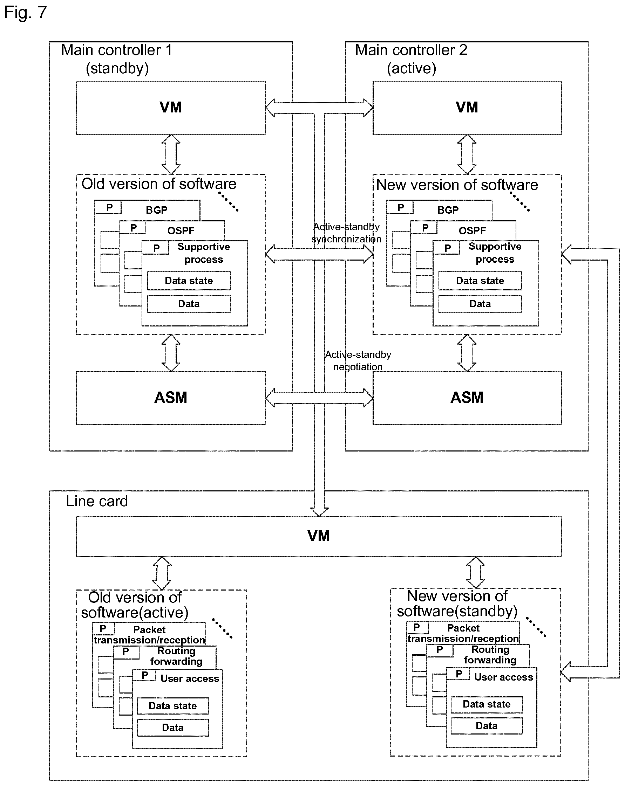

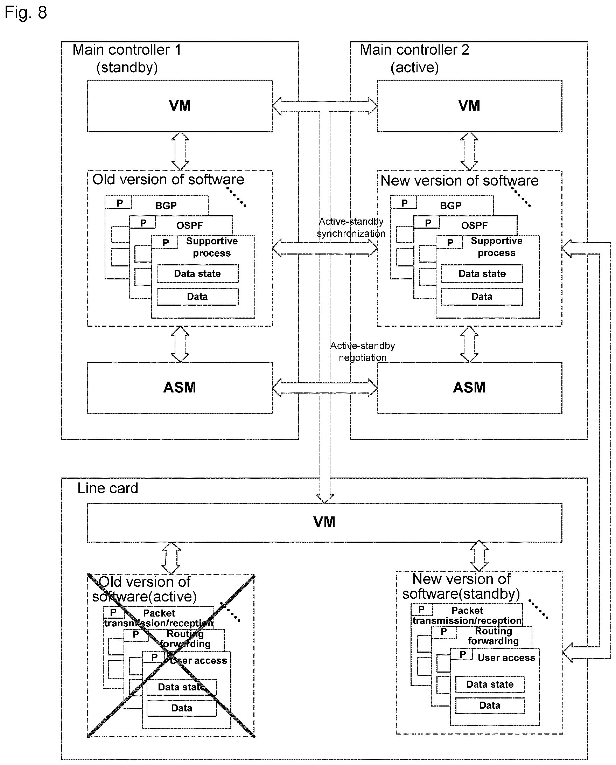

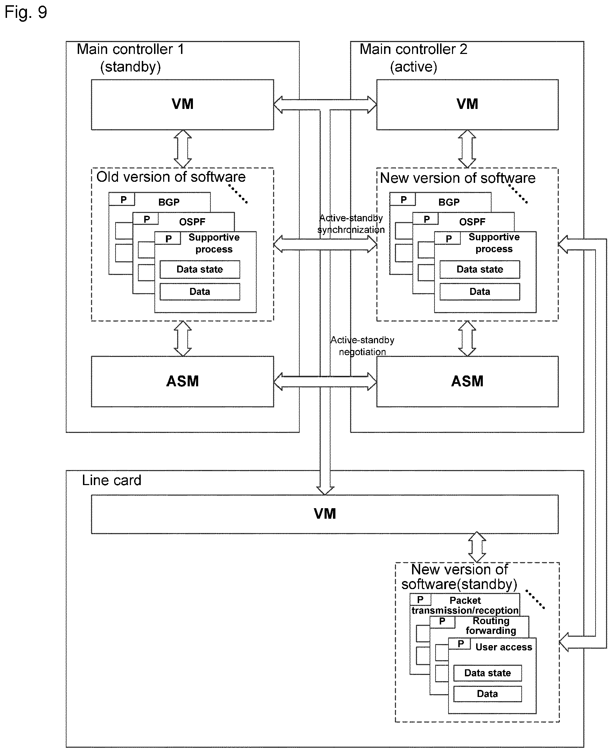

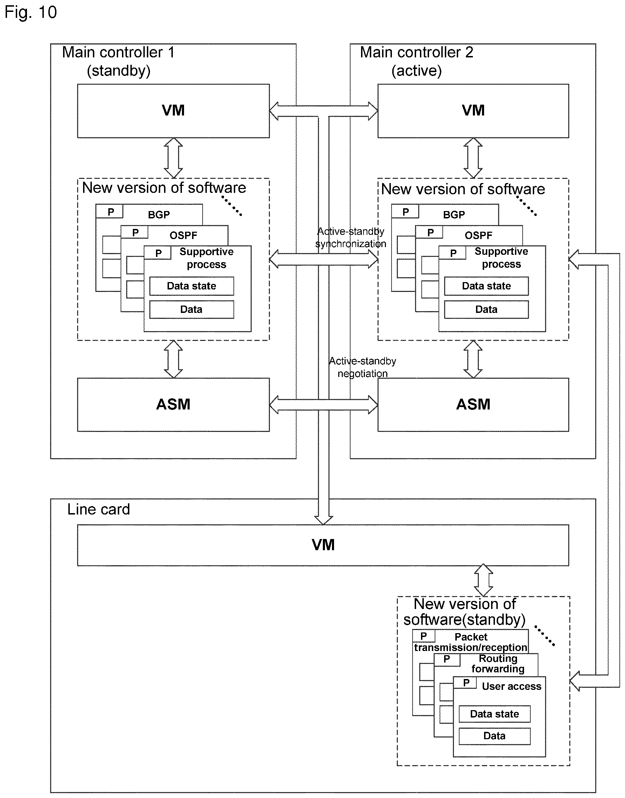

Processing steps for implementing, on a network, a software upgrading method for a distributed access gateway are as follows.
Stage 1, upgrading of a software of a main controller.
   S1, before software upgrading, a new version of a software to which an old version of the software is to be upgraded needs to be copied to an active main controller of an access gateway (the device automatically copies it to a standby main controller); a new version of a software of the line card is acquired by request from the main controller;
   S2, an old version of the software on a main controller 1 runs in an active state, a user sends a main controller software upgrading instruction to a Version Manager (VM) on the main controller 1;
   S3, after receiving the main controller software upgrading instruction, the VM on the main controller 1 sends a command to a VM on the main controller 2, the old version of the software is upgraded to a new version of the software and the new version of the software is launched on the main controller 2, as shown in Fig. 6;
   S4, after being launched, the new version of the software on the main controller 2 runs in a standby state; before running in the active state, the new version of the software on the main controller 2 does not provide service to the outside of the system;
   S5, data and data state recovery is performed on the new version of the software on the main controller 2 through the old version of the software on the main controller 1, so that after entering a running state, the new version of the software can take over seamlessly the old version of the software to provide services to the outside; preferably, there may be one or more communication links for the data and data state recovery;
   S6, after the data and data state recovery is finished, the new version of the software on the main controller 2 sends, through the VM on the main controller 2, a standby main controller new version launch completion notification to the VM on the main controller 1;
   S7, after receiving the standby main controller new version launch completion notification, the VM on the main controller 1 triggers active/standby state inversion of the active main controller on an Active Standby Manager (ASM) on the main controller 1, as shown in Fig. 7. And the VM on the main controller 2 triggers active/standby state inversion of the standby main controller on an ASM on the main controller 2;
   S8, the main controller 1 is changed to a new standby main controller, and the main controller 2 is changed to a new active main controller. A new version of the software on the new active main controller replaces the old version of the software and enters an active running state so as to provide service to the outside. The old version of the software on the new standby main controller does not provide services to the outside;
   S9, preferably, as shown in Fig. 10, when the main controller 1 is changed to the new standby main controller, the old version of the software on the main controller 1 can be upgraded to a new version of the software and launched in the standby state; and
   S10, the VM on the main controller 1 feeds a result of upgrading success back to the user, and indicates that subsequent upgrading of a software of the line card can be implemented.
Stage 2, upgrading of a software of a line card (upgrading is performed line card by line card, line card 1 is taken as an example to elaborate, other line cards have a same upgrading process).
   S11, after the upgrading of the software of the main controller succeeds, the user sends a software upgrading instruction for the line card 1 to the VM of the main controller 2;
   S12, after receiving the software upgrading instruction for the line card 1, the VM on the main controller 2 sends a line card software upgrading instruction to a VM on the line card 1;
   S13, as shown in Fig. 7, after receiving the line card software upgrading instruction, the VM on the line card 1 acquires the new version of the software from the main controller 2, launches the new version of the software of the control plane and of the management plane on the line card and runs it in the standby state, and before being changed to the active state, the new version of the software of the control plane and of the management plane does not provide services to the outside;
   S14, in order to avoid service interruption, before entering a running state, the new version of the software of the control plane and of the management plane on the line card 1 needs to recover data and data state required for providing services. For the new version of the software on the line card 1 of the access gateway, the data and data state recovery is implemented through multiple communication links;
   S15, the data and data state recovery of the new version of software of the control plane and of the management plane on the line card 1 is performed by the main controller 2;
   S16, after the data and data state recovery of the new version of software of the control plane and of the management plane on the line card 1 is finished, a data and data state synchronization completion notification is sent to the VM on the line card;
   S17, after receiving the new version software recovery completion notification, the VM on the line card 1 sends a cancellation instruction to the old version of the software of the control plane and of the management plane on the line card 1. And the VM on the line card 1 sends an active/standby state inversion instruction to the new version of the software of the control plane and of the management plane on the line card 1;
   S18, as shown in Fig. 8, after the reception of the cancellation instruction from the VM, the old version of the software of the control plane and of the management plane on the line card 1 is cancelled;
   S19, as shown in Fig. 9, after the reception of the active/standby inversion instruction from the VM, active/standby state inversion is performed on the new version of the software of the control plane and of the management plane on the line card 1 so that the new version of the software replaces the old version of the software of the control plane and of the management plane and enters the running state;
   S20, after the new version of the software of the control plane and of the management plane on the line card 1 enters the running state, a software of the forwarding plane is upgraded as required, and refreshing of a forwarding table is triggered so as to validate the entries of the forwarding table of a new version of the software.
   S21, the VM on the line card 1 feeds a result of the upgrading of the software on the line card back to the main controller 2.

By description based on specific embodiments, technical means adopted by the disclosure for achieving predetermined objectives and beneficial effects should be understood more thoroughly and specifically, however, the drawings are designed solely for purposes of illustration. The invention is defined by the appended claims.

## Claims

1. A software upgrading method for a distributed communication device, applied to a software upgrading system for the distributed communication device that comprises an active main control unit, a standby main control unit and a line card, the method comprising:
notifying, by the active main control unit (20), the standby main control unit (30) to launch a new version of a software and run said new version of the software in a standby state, and performing data and data state recovery on said new version of the software on the standby main control unit (30) through an old version of the software on the active main control unit (20);
performing active/standby state inversion between the active main control unit and the standby main control unit, wherein the active/standby state inversion is performed such that the active main control unit (20) being inverted to a current standby main control unit (30) and the standby main control unit being inverted to a current active main control unit;
launching, by the line card (40), a new version of a software of a control plane and of a management plane and running said new version of the software in a standby state, and performing data and data state recovery on said new version of the software on the line card through a current active main control unit, or performing data and data state recovery on said new version of the software on the line card through an old version of the software of the control plane and of the management plane on the line card;
cancelling, by the line card (40), said old version of the software of the control plane and of the management plane, and running said new version of the software of the control plane and of the management plane in an active state; and
refreshing, by the line card, data of and a data state of a software of a forwarding plane.

2. The software upgrading method for a distributed communication device according to claim 1, wherein the notifying, by the active main control unit, the standby main control unit to launch a new version of a software and run said new version of the software in a standby state, and performing data and data state recovery on said new version of the software on the standby main control unit through an old version of the software on the active main control unit comprise:
notifying, by the active main control unit (20), the standby main control unit to launch the new version of the software on the standby main control unit; and
performing the data and data state recovery on said new version of the software on the standby main control unit (30) through the old version of the software on the active main control unit based on a data recovery assembly.

3. The software upgrading method for a distributed communication system according to claim 1, wherein the launching, by the line card (40), a new version of a software of a control plane and of a management plane and running said new version of the software in a standby state, and performing data and data state recovery on said new version of the software on the line card through a current active main control unit, or performing data and data state recovery on said new version of the software on the line card through an old version of the software of the control plane and of the management plane on the line card comprise:
after the active/standby state inversion between the active main control unit (20) and the standby main control unit (30) is finished, launching, by the line card, said new version of the software of the control plane and of the management plane on the line card and running said new version of the software in the standby state;
performing the data and data state recovery on said new version of the software on the line card through a new version of a software of the current active main control unit (30) based on a data recovery assembly, or performing the data and data state recovery on said new version of the software on the line card through the old version of the software of the control plane and of the management plane on the line card based on a data recovery assembly; and
after the data and data state recovery performed on the line card is finished, cancelling, by the line card, said old version of the software of the control plane and of the management plane, running said new version of the software of the control plane and of the management plane in the active state, and refreshing the data of and the data state of the software of the forwarding plane.

4. The software upgrading method for a distributed communication device according to claim 1, further comprising:
after the data and data state recovery performed on the line card is finished and before the data of and the data state of the software of the forwarding plane are refreshed, upgrading the software of the forwarding plane on the line card.

5. The software upgrading method for a distributed communication device according to any one of claims 1 to 4, further comprising:
after the active/standby state inversion between the active main control unit and the standby main control unit (30) is finished, upgrading said old version of the software on an original active main control unit (40) to the new version of the software and running the new version of the software in the standby state.

6. A software upgrading system for a distributed communication device, comprising an active main control unit, a standby main control unit and a line card, the active main control unit (20) is configured to notify the standby main control unit (30) to launch a new version of a software, to perform data and data state recovery on said new version of the software on the standby main control unit (30) through an old version of the software on the active main control unit, and to change a running state of the active main control unit to a standby state after the data and data state recovery is finished;
the standby main control unit (30) is configured to launch said new version of the software and run the said new version of the software in a standby state, to cooperate with the active main control unit to perform the data and data state recovery on said new version of the software, and to change a running state of the standby main control unit to an active state after the data and data state recovery is finished; and
the line card (40) is configured to, after active/standby state inversion between the active main control unit and the standby main control unit is finished, launch a new version of a software of a control plane and of a management plane on the line card and run said new version of the software in a standby state, and to perform data and data state recovery on said new version of the software on the line card through a current active main control unit, or to perform data and data state recovery on said new version of the software on the line card through an old version of the software of the control plane and of the management plane on the line card, and to, after the data and data state recovery performed on the line card is finished, cancel said old version of the software of the control plane and of the management plane, run said new version of the software of the control plane and of the management plane in the active state, and refresh data of and a data state of a software of a forwarding plane,
wherein the active/standby state inversion is performed such that the active main control unit being inverted to a current standby main control unit (30) and the standby main control unit being inverted to a current active main control unit.

7. The software upgrading system for a distributed communication device according to claim 6, wherein the active main control unit comprises a first version manager (21) and a first active standby manager (22), the standby main control unit comprises a second version manager (31) and a second active standby manager (32), and each software on the active and standby main control units comprises a data recovery assembly;
wherein the first version manager (21) is configured to notify the second version manager to launch the new version of the software on the standby main control unit, and to, after the data and data state recovery is finished, notify the first active standby manager to change the running state of the active main control unit to a standby state;
the second version manager (31) is configured to launch the new version of the software on the standby main control unit, and to, after the data and data state recovery is finished, notify the second active standby manager to change the running state of the standby main control unit to the active state;
the first active standby manager (22) is configured to perform the active/standby state inversion on the running state of the active main control unit; and
the second active standby manager (32) is configured to perform the active/standby state inversion on the running state of the standby main control unit;
wherein the data and data state recovery is performed on said new version of the software on the standby main control unit through the old version of the software on the active main control unit based on the data recovery assembly of the active main control unit.

8. The software upgrading system for a distributed communication device according to claim 6, wherein the line card (40) comprises a third version manager (41), and each software on the active and standby main control units and the line card comprises a data recovery assembly;
wherein the third version manager (41) is configured to, after the active/standby state inversion between the active main control unit (20) and the standby main control unit (30) is finished, launch said new version of the software of the control plane and of the management plane on the line card and run said new version of the software in a standby state; and to, after the data and data state recovery performed on the line card is finished, cancel said old version of the software of the control plane and of the management plane, run said new version of the software of the control plane and of the management plane in the active state, and refresh the data of and the data state of the software of the forwarding plane;
wherein the data and data state recovery is performed on said new version of the software on the line card through the current active main control unit based on the data recovery assembly of the current active main control unit, or the data and data state recovery is performed on said new version of the software on the line card through the old version of the software of the control plane and of the management plane on the line card based on the data recovery assembly of the line card.

9. The software upgrading system for a distributed communication device according to claim 6, wherein the line card (40) is further configured to, after the data and data state recovery performed on the line card is finished and before the data of and the data state of the software of the forwarding plane are refreshed, upgrade the software of the forwarding plane on the line card.

10. The software upgrading system for a distributed communication device according to any one of claims 6 to 9, wherein the active main control unit (20) is further configured to, after the active/standby state inversion between the active main control unit (20) and the standby main control unit (30) is finished, upgrade said old version of the software on an original active main control unit to the new version of the software and run the new version of the software in the standby state.

## Patentansprüche

1. Software-Upgradeverfahren für ein Gerät für verteilte Kommunikation, das auf ein Software-Upgradesystem für das Gerät für verteilte Kommunikation angewendet wird, das eine aktive Hauptsteuereinheit, eine Bereitschafts-Hauptsteuereinheit und eine Leitungskarte umfasst, wobei das Verfahren Folgendes umfasst:
Benachrichtigen der Bereitschafts-Hauptsteuereinheit (30) durch die aktive Hauptsteuereinheit (20), eine neue Version einer Software in Betrieb zu nehmen und die neue Version der Software in einem Bereitschaftszustand auszuführen, und Ausführen von Daten- und Datenzustandswiederherstellung in der neuen Version der Software in der Bereitschafts-Hauptsteuereinheit (30) durch eine alte Version der Software in der aktiven Hauptsteuereinheit (20),
Ausführen einer Umkehr zwischen aktivem und Bereitschaftszustand zwischen der aktiven Hauptsteuereinheit und der Bereitschafts-Hauptsteuereinheit, wobei die Umkehr zwischen aktivem und Bereitschaftszustand derart ausgeführt wird, dass die aktive Hauptsteuereinheit (20) in eine gegenwärtige Bereitschafts-Hauptsteuereinheit (30) umgekehrt wird und die Bereitschafts-Hauptsteuereinheit in eine gegenwärtige aktive Hauptsteuereinheit umgekehrt wird,
In-Betrieb-Nehmen einer neuen Version einer Software einer Steuerebene und einer Verwaltungsebene durch die Leitungskarte (40) und Ausführen der neuen Version der Software in einem Bereitschaftszustand und Durchführen von Daten- und Datenzustandswiederherstellung in der neuen Version der Software auf der Leitungskarte durch eine gegenwärtig aktive Hauptsteuereinheit oder Durchführen von Daten- und Datenzustandswiederherstellung in der neuen Version der Software auf der Leitungskarte durch eine alte Version der Software der Steuerebene und der Verwaltungsebene auf der Leitungskarte,
Löschen der alten Version der Software der Steuerebene und der Verwaltungsebene durch die Leitungskarte (40) und Ausführen der neuen Version der Software der Steuerebene und der Verwaltungsebene in einem aktiven Zustand und
Aktualisieren von Daten und einem Datenzustand einer Software einer Weiterleitungsebene durch die Leitungskarte.

2. Software-Upgradeverfahren für ein Gerät für verteilte Kommunikation nach Anspruch 1, wobei das Benachrichtigen der Bereitschafts-Hauptsteuereinheit durch die aktive Hauptsteuereinheit, eine neue Version einer Software in Betrieb zu nehmen und die neue Version der Software in einem Bereitschaftszustand auszuführen und Daten- und Datenzustandswiederherstellung in der neuen Version der Software in der Bereitschafts-Hauptsteuereinheit durch eine alte Version der Software in der aktiven Hauptsteuereinheit zu betreiben, Folgendes umfasst:
Benachrichtigen der Bereitschafts-Hauptsteuereinheit durch die aktive Hauptsteuereinheit (20), die neue Version der Software in der Bereitschafts-Hauptsteuereinheit in Betrieb zu nehmen, und
Durchführen von Daten- und Datenzustandswiederherstellung in der neuen Version der Software in der Bereitschafts-Hauptsteuereinheit (30) durch die alte Version der Software in der aktiven Hauptsteuereinheit, basierend auf einer Datenwiederherstellungsanordnung.

3. Software-Upgradeverfahren für ein Gerät für verteilte Kommunikation nach Anspruch 1, wobei das In-Betrieb-Nehmen durch die Leitungskarte (40), einer neuen Version einer Software einer Steuerebene und einer Verwaltungsebene und das Ausführen der neuen Version der Software in einem Bereitschaftszustand und das Durchführen von Daten- und Datenzustandswiederherstellung in der neuen Version der Software auf der Leitungskarte durch eine gegenwärtig aktive Hauptsteuereinheit oder das Durchführen einer Daten- und Datenzustandswiederherstellung in der neuen Version der Software auf der Leitungskarte durch eine alte Version der Software der Steuerebene und der Verwaltungsebene auf der Leitungskarte Folgendes umfasst:
nachdem die Umkehr zwischen aktivem und Bereitschaftszustand der aktiven Hauptsteuereinheit (20) und der Bereitschafts-Hauptsteuereinheit (30) abgeschlossen ist, In-Betrieb-Nehmen der neuen Version der Software der Steuerebene und der Verwaltungsebene auf der Leitungskarte durch die Leitungskarte und Ausführen der neuen Version der Software in dem Bereitschaftszustand,
Durchführen der Daten- und Datenzustandswiederherstellung in der neuen Version der Software auf der Leitungskarte durch eine neue Version einer Software der gegenwärtig aktiven Hauptsteuereinheit (30), basierend auf einer Datenwiederherstellungsanordnung, oder Durchführen der Daten- und Datenzustandswiederherstellung in der neuen Version der Software auf der Leitungskarte durch die alte Version der Software der Steuerebene und der Verwaltungsebene auf der Leitungskarte, basierend auf einer Datenwiederherstellungsanordnung, und
nachdem das Durchführen der Daten- und Datenzustandswiederherstellung auf der Leitungskarte abgeschlossen ist, Löschen der alten Version der Software der Steuerebene und der Verwaltungsebene durch die Leitungskarte, Ausführen der neuen Version der Software der Steuerebene und der Verwaltungsebene in dem aktiven Zustand und Aktualisieren der Daten und des Datenzustandes der Software der Weiterleitungsebene.

4. Software-Upgradeverfahren für ein Gerät für verteilte Kommunikation nach Anspruch 1, ferner Folgendes umfassend:
nachdem das Durchführen der Daten- und Datenzustandswiederherstellung auf der Leitungskarte abgeschlossen ist und bevor die Daten und der Datenzustand der Software der Weiterleitungsebene aktualisiert werden, Upgraden der Software der Weiterleitungsebene auf der Leitungskarte.

5. Software-Upgradeverfahren für ein Gerät für verteilte Kommunikation nach einem der Ansprüche 1 bis 4, ferner Folgendes umfassend:
nachdem die Umkehr zwischen aktivem und Bereitschaftszustand der aktiven Hauptsteuereinheit und der Bereitschafts-Hauptsteuereinheit (30) abgeschlossen ist, Upgraden der alten Version der Software in einer ursprünglich aktiven Hauptsteuereinheit (40) auf die neue Version der Software und Ausführen der neuen Version der Software in dem Bereitschaftszustand.

6. Software-Upgradesystem für ein Gerät für verteilte Kommunikation, das eine aktive Hauptsteuereinheit, eine Bereitschafts-Hauptsteuereinheit und eine Leitungskarte umfasst,
wobei die aktive Hauptsteuereinheit (20) dafür konfiguriert ist, die Bereitschafts-Hauptsteuereinheit (30) zu benachrichtigen, eine neue Version einer Software in Betrieb zu nehmen, eine Daten- und Datenzustandswiederherstellung in der neuen Version der Software in der Bereitschafts-Hauptsteuereinheit (30) durch eine alte Version der Software in der aktiven Hauptsteuereinheit auszuführen und einen Ausführungszustand der aktiven Hauptsteuereinheit in einen Bereitschaftszustand zu verändern, nachdem die Daten- und Datenzustandswiederherstellung abgeschlossen ist,
wobei die Bereitschafts-Hauptsteuereinheit (30) dafür konfiguriert ist, die neue Version der Software in Betrieb zu nehmen und die neue Version der Software in einem Bereitschaftszustand auszuführen, um mit der aktiven Hauptsteuereinheit zusammenzuarbeiten, um die Daten- und Datenzustandswiederherstellung auf der neuen Version der Software durchzuführen und einen Ausführungszustand der Bereitschafts-Hauptsteuereinheit auf einen aktiven Zustand zu ändern, nachdem die Daten- und Datenzustandswiederherstellung abgeschlossen ist, und
wobei die Leitungskarte (40) dafür konfiguriert ist, nachdem die Umkehr zwischen aktivem und Bereitschaftszustand zwischen der aktiven Hauptsteuereinheit und der Bereitschafts-Hauptsteuereinheit abgeschlossen ist, eine neue Version einer Software einer Steuerebene und einer Verwaltungsebene der Leitungskarte in Betrieb zu nehmen und die neue Version der Software in einem Bereitschaftszustand auszuführen und die Daten- und Datenzustandswiederherstellung in der neuen Version der Software auf der Leitungskarte durch eine gegenwärtig aktive Hauptsteuereinheit durchzuführen oder die Daten- und Datenzustandswiederherstellung in der neuen Version der Software auf der Leitungskarte durch eine alte Version der Software der Steuerebene und der Verwaltungsebene der Leitungskarte durchzuführen und nachdem die auf der Leitungskarte durchgeführte Daten- und Datenzustandswiederherstellung abgeschlossen ist, die alte Version der Software der Steuerebene und der Verwaltungsebene zu löschen, die neue Version der Software der Steuerebene und der Verwaltungsebene in dem aktiven Zustand auszuführen und Daten und einen Datenzustand einer Software einer Weiterleitungsebene zu aktualisieren,
wobei die Umkehr zwischen aktivem und Bereitschaftszustand derart durchgeführt wird, dass die aktive Hauptsteuereinheit in eine gegenwärtige Bereitschafts-Hauptsteuereinheit (30) und die Bereitschafts-Hauptsteuereinheit in eine gegenwärtig aktive Hauptsteuereinheit umgekehrt wird.

7. Software-Upgradesystem für ein Gerät für verteilte Kommunikation nach Anspruch 6, wobei die aktive Hauptsteuereinheit eine erste Versionenverwaltung (21) und eine erste Aktiv-Bereitschafts-Verwaltung (22) umfasst, wobei die Bereitschafts-Hauptsteuereinheit eine zweite Versionenverwaltung (31) und eine zweite Aktiv-Bereitschafts-Verwaltung (32) umfasst und jede Software auf der aktiven und der Bereitschafts-Hauptsteuereinheit eine Datenwiederherstellungsanordnung umfasst,
wobei die erste Versionenverwaltung (21) dafür konfiguriert ist, die zweite Versionenverwaltung zu benachrichtigen, die neue Version der Software auf der Bereitschafts-Hauptsteuereinheit in Betrieb zu nehmen und, nachdem die Daten- und Datenzustandswiederherstellung abgeschlossen ist, die erste Aktiv-Bereitschafts-Verwaltung zu benachrichtigen, den Ausführungszustand der aktiven Hauptsteuereinheit in einen Bereitschaftszustand zu ändern,
wobei die zweite Versionenverwaltung (31) dafür konfiguriert ist, die neue Version der Software in der Bereitschafts-Hauptsteuereinheit in Betrieb zu nehmen und, nachdem die Daten- und Datenzustandswiederherstellung abgeschlossen ist, die zweite Aktiv-Bereitschafts-Verwaltung zu benachrichtigen, den Ausführungszustand der Bereitschafts-Hauptsteuereinheit in den aktiven Zustand zu ändern,
wobei die erste Aktiv-Bereitschafts-Verwaltung (22) dafür konfiguriert ist, die Umkehr zwischen aktivem und Bereitschaftszustand an dem Ausführungszustand der aktiven Hauptsteuereinheit durchzuführen, und
wobei die zweite Aktiv-Bereitschafts-Verwaltung (32) dafür konfiguriert ist, die Umkehr zwischen aktivem und Bereitschaftszustand an dem Ausführungszustand der Bereitschafts-Hauptsteuereinheit auszuführen,
wobei die Daten- und Datenzustandswiederherstellung in der neuen Version der Software in der Bereitschafts-Hauptsteuereinheit durch die alte Version der Software in der aktiven Hauptsteuereinheit durchgeführt wird, basierend auf der Datenwiederherstellungsanordnung der aktiven Hauptsteuereinheit.

8. Software-Upgradesystem für ein Gerät für verteilte Kommunikation nach Anspruch 6, wobei die Leitungskarte (40) eine dritte Versionenverwaltung (41) umfasst und die Software von jeweils der aktiven und der Bereitschafts-Hauptsteuereinheit und der Leitungskarte eine Datenwiederherstellungsanordnung umfasst,
wobei die dritte Versionenverwaltung (41) dafür konfiguriert ist, nachdem die Umkehr zwischen aktivem und Bereitschaftszustand der aktiven Hauptsteuereinheit (20) und der Bereitschafts-Hauptsteuereinheit (30) abgeschlossen ist, die neue Version der Software der Steuerebene und der Verwaltungsebene auf der Leitungskarte in Betrieb zu nehmen und die neue Version der Software in einem Bereitschaftszustand auszuführen, und, nachdem die auf der Leitungskarte durchgeführte Daten- und Datenzustandswiederherstellung abgeschlossen ist, die alte Version der Software der Steuerebene und der Verwaltungsebene zu löschen, die neue Version der Software der Steuerebene und der Verwaltungsebene in dem aktiven Zustand auszuführen und die Daten und den Datenzustand der Software der Weiterleitungsebene zu aktualisieren,
wobei die Daten- und Datenzustandswiederherstellung in der neuen Version der Software auf der Leitungskarte durch die gegenwärtig aktive Hauptsteuereinheit basierend auf der Datenwiederherstellungsanordnung der gegenwärtig aktiven Hauptsteuereinheit ausgeführt wird oder die Daten- und Datenzustandswiederherstellung in der neuen Version der Software auf der Leitungskarte durch die alte Version der Software der Steuerebene und der Verwaltungsebene auf der Leitungskarte basierend auf der Datenwiederherstellungsanordnung der Leitungskarte durchgeführt wird.

9. Software-Upgradesystem für ein Gerät für verteilte Kommunikation nach Anspruch 6, wobei die Leitungskarte (40) ferner dafür konfiguriert ist, nachdem die auf der Leitungskarte durchgeführte Daten- und Datenzustandswiederherstellung abgeschlossen ist und bevor die Daten und der Datenzustand der Software der Weiterleitungsebene aktualisiert werden, die Software der Weiterleitungsebene auf der Leitungskarte zu aktualisieren.

10. Software-Upgradesystem für ein Gerät für verteilte Kommunikation nach einem der Ansprüche 6 bis 9, wobei die aktive Hauptsteuereinheit (20) ferner dafür konfiguriert ist, nachdem die Umkehr zwischen aktivem und Bereitschaftszustand der aktiven Hauptsteuereinheit (20) und der Bereitschafts-Hauptsteuereinheit (30) abgeschlossen ist, die alte Version der Software in einer ursprünglich aktiven Hauptsteuereinheit auf die neue Version der Software zu upgraden und die neue Version der Software in dem Bereitschaftszustand auszuführen.

## Revendications

1. Procédé de mise à niveau de logiciel pour un dispositif de communication répartie, appliqué à un système de mise à niveau de logiciel pour le dispositif de communication répartie qui comprend une unité de commande principale active, une unité de commande principale de veille et une carte de ligne, le procédé comprenant les étapes ci-dessous consistant à :
notifier, par le biais de l'unité de commande principale active (20), à l'unité de commande principale de veille (30), de lancer une nouvelle version d'un logiciel et d'exécuter ladite nouvelle version du logiciel dans un état de veille, et mettre en oeuvre une récupération de données et d'état de données sur ladite nouvelle version du logiciel sur l'unité de commande principale de veille (30) à travers une ancienne version du logiciel sur l'unité de commande principale active (20) ;
mettre en oeuvre une inversion d'état actif / état de veille entre l'unité de commande principale active et l'unité de commande principale de veille, l'inversion d'état actif / état de veille étant mise en oeuvre de sorte que l'unité de commande principale active (20) est inversée pour devenir une unité de commande principale de veille actuelle (30) et l'unité de commande principale de veille est inversée pour devenir une unité de commande principale active actuelle ;
lancer, par le biais de la carte de ligne (40), une nouvelle version d'un logiciel d'un plan de commande et d'un plan de gestion et exécuter ladite nouvelle version du logiciel dans un état de veille, et mettre en oeuvre une récupération de données et d'état de données sur ladite nouvelle version du logiciel sur la carte de ligne à travers une unité de commande principale active actuelle, ou mettre en oeuvre une récupération de données et d'état de données sur ladite nouvelle version du logiciel sur la carte de ligne à travers une ancienne version du logiciel du plan de commande et du plan de gestion sur la carte de ligne ;
annuler, par le biais de la carte de ligne (40), ladite ancienne version du logiciel du plan de commande et du plan de gestion, et exécuter ladite nouvelle version du logiciel du plan de commande et du plan de gestion dans un état actif ; et
rafraîchir, par le biais de la carte de ligne, des données et un état de données d'un logiciel d'un plan d'acheminement.

2. Procédé de mise à niveau de logiciel pour un dispositif de communication répartie selon la revendication 1, dans lequel l'étape consistant à notifier, par le biais de l'unité de commande principale active, à l'unité de commande principale de veille, de lancer une nouvelle version d'un logiciel et d'exécuter ladite nouvelle version du logiciel dans un état de veille, et l'étape consistant à mettre en oeuvre une récupération de données et d'état de données sur ladite nouvelle version du logiciel sur l'unité de commande principale de veille à travers une ancienne version du logiciel sur l'unité de commande principale active comprennent les étapes ci-dessous consistant à :
notifier, par le biais de l'unité de commande principale active (20), à l'unité de commande principale de veille, de lancer la nouvelle version du logiciel sur l'unité de commande principale de veille ; et
mettre en oeuvre la récupération de données et d'état de données sur ladite nouvelle version du logiciel sur l'unité de commande principale de veille (30) à travers l'ancienne version du logiciel sur l'unité de commande principale active, sur la base d'un ensemble de récupération de données.

3. Procédé de mise à niveau de logiciel pour un dispositif de communication répartie selon la revendication 1, dans lequel l'étape consistant à lancer, par le biais de la carte de ligne (40), une nouvelle version d'un logiciel d'un plan de commande et d'un plan de gestion et exécuter ladite nouvelle version du logiciel dans un état de veille, et l'étape consistant à mettre en oeuvre une récupération de données et d'état de données sur ladite nouvelle version du logiciel sur la carte de ligne à travers une unité de commande principale active actuelle, ou l'étape consistant à mettre en oeuvre une récupération de données et d'état de données sur ladite nouvelle version du logiciel sur la carte de ligne à travers une ancienne version du logiciel du plan de commande et du plan de gestion sur la carte de ligne comprennent les étapes ci-dessous consistant à :
à l'issue de l'inversion d'état actif / état de veille entre l'unité de commande principale active (20) et l'unité de commande principale de veille (30), lancer, par le biais de la carte de ligne, ladite nouvelle version du logiciel du plan de commande et du plan de gestion sur la carte de ligne et exécuter ladite nouvelle version du logiciel dans l'état de veille ;
mettre en oeuvre la récupération de données et d'état de données sur ladite nouvelle version du logiciel sur la carte de ligne à travers une nouvelle version d'un logiciel de l'unité de commande principale active actuelle (30), sur la base d'un ensemble de récupération de données, ou mettre en oeuvre la récupération de données et d'état de données sur ladite nouvelle version du logiciel sur la carte de ligne à travers l'ancienne version du logiciel du plan de commande et du plan de gestion sur la carte de ligne, sur la base d'un ensemble de récupération de données ; et
à l'issue de la récupération de données et d'état de données mise en oeuvre sur la carte de ligne, annuler, par le biais de la carte de ligne, ladite ancienne version du logiciel du plan de commande et du plan de gestion, exécuter ladite nouvelle version du logiciel du plan de commande et du plan de gestion à l'état actif, et rafraîchir les données et l'état de données du logiciel du plan d'acheminement.

4. Procédé de mise à niveau de logiciel pour un dispositif de communication répartie selon la revendication 1, comprenant en outre l'étape ci-dessous consistant à :
à l'issue de la récupération de données et d'état de données mise en oeuvre sur la carte de ligne, et avant que les données et l'état de données du logiciel du plan d'acheminement ne soient rafraîchis, mettre à niveau le logiciel du plan d'acheminement sur la carte de ligne.

5. Procédé de mise à niveau de logiciel pour un dispositif de communication répartie selon l'une quelconque des revendications 1 à 4, comprenant en outre l'étape ci-dessous consistant à :
à l'issue de l'inversion d'état actif / état de veille entre l'unité de commande principale active et l'unité de commande principale de veille (30), mettre à niveau ladite ancienne version du logiciel sur une unité de commande principale active d'origine (40) vers la nouvelle version du logiciel, et exécuter la nouvelle version du logiciel dans l'état de veille.

6. Système de mise à niveau de logiciel pour un dispositif de communication répartie, comprenant une unité de commande principale active, une unité de commande principale de veille et une carte de ligne ;
dans lequel l'unité de commande principale active (20) est configurée de manière à notifier, à l'unité de commande principale de veille (30), de lancer une nouvelle version d'un logiciel, mettre en oeuvre une récupération de données et d'état de données sur ladite nouvelle version du logiciel sur l'unité de commande principale de veille (30) à travers une ancienne version du logiciel sur l'unité de commande principale active, et modifier un état d'exécution de l'unité de commande principale active en un état de veille à l'issue de la récupération de données et d'état de données ;
dans lequel l'unité de commande principale de veille (30) est configurée de manière à lancer ladite nouvelle version du logiciel et à exécuter ladite nouvelle version du logiciel dans un état de veille, à coopérer avec l'unité de commande principale active pour mettre en oeuvre la récupération de données et d'état de données sur ladite nouvelle version du logiciel, et à modifier un état d'exécution de l'unité de commande principale de veille en un état actif à l'issue de la récupération de données et d'état de données ; et
dans lequel la carte de ligne (40) est configurée de manière à, à l'issue de l'inversion d'état actif / état de veille entre l'unité de commande principale active et l'unité de commande principale de veille, lancer une nouvelle version d'un logiciel d'un plan de commande et d'un plan de gestion sur la carte de ligne et exécuter ladite nouvelle version du logiciel dans un état de veille, et à mettre en oeuvre une récupération de données et d'état de données sur ladite nouvelle version du logiciel sur la carte de ligne à travers une unité de commande principale active actuelle, ou à mettre en oeuvre une récupération de données et d'état de données sur ladite nouvelle version du logiciel sur la carte de ligne à travers une ancienne version du logiciel du plan de commande et du plan de gestion sur la carte de ligne, et à, à l'issue de la récupération de données et d'état de données mise en oeuvre sur la carte de ligne, annuler ladite ancienne version du logiciel du plan de commande et du plan de gestion, exécuter ladite nouvelle version du logiciel du plan de commande et du plan de gestion dans l'état actif et rafraîchir des données et un état de données d'un logiciel d'un plan d'acheminement ;
dans lequel l'inversion d'état actif / état de veille est mise en oeuvre de sorte que l'unité de commande principale active est inversée pour devenir une unité de commande principale de veille actuelle (30) et l'unité de commande principale de veille est inversée pour devenir une unité de commande principale active actuelle.

7. Système de mise à niveau de logiciel pour un dispositif de communication répartie selon la revendication 6, dans lequel l'unité de commande principale active comprend un premier gestionnaire de version (21) et un premier gestionnaire de veille actif (22), l'unité de commande principale de veille comprend un deuxième gestionnaire de version (31) et un second gestionnaire de veille actif (32), et chaque logiciel sur l'unité de commande principale active et l'unité de commande principale de veille comprend un ensemble de récupération de données ;
dans lequel le premier gestionnaire de version (21) est configuré de manière à notifier, au deuxième gestionnaire de version, de lancer la nouvelle version du logiciel sur l'unité de commande principale de veille, et à, à l'issue de la récupération de données et d'état de données, notifier, au premier gestionnaire de veille actif, de modifier l'état d'exécution de l'unité de commande principale active en un état de veille ;
le deuxième gestionnaire de version (31) est configuré de manière à lancer la nouvelle version du logiciel sur l'unité de commande principale de veille et à, à l'issue de la récupération de données et d'état de données, notifier, au second gestionnaire de veille actif, de modifier l'état d'exécution de l'unité de commande principale de veille en l'état actif ;
le premier gestionnaire de veille actif (22) est configuré de manière à mettre en oeuvre l'inversion d'état actif / état de veille sur l'état d'exécution de l'unité de commande principale active ; et
le second gestionnaire de veille actif (32) est configuré de manière à mettre en oeuvre l'inversion d'état actif / état de veille sur l'état d'exécution de l'unité de commande principale de veille ;
dans lequel la récupération de données et d'état de données est mise en oeuvre sur ladite nouvelle version du logiciel sur l'unité de commande principale de veille à travers l'ancienne version du logiciel sur l'unité de commande principale active, sur la base de l'ensemble de récupération de données de l'unité de commande principale active.

8. Système de mise à niveau de logiciel pour un dispositif de communication répartie selon la revendication 6, dans lequel la carte de ligne (40) comprend un troisième gestionnaire de version (41), et chaque logiciel sur l'unité de commande principale active et l'unité de commande principale de veille, et la carte de ligne comprend un ensemble de récupération de données ;
dans lequel le troisième gestionnaire de version (41) est configuré de manière à, à l'issue de l'inversion d'état actif / état de veille entre l'unité de commande principale active (20) et l'unité de commande principale de veille (30), lancer ladite nouvelle version du logiciel du plan de commande et du plan de gestion sur la carte de ligne et exécuter ladite nouvelle version du logiciel dans un état de veille ; et à, à l'issue de la récupération de données et d'état de données mise en oeuvre sur la carte de ligne, annuler ladite ancienne version du logiciel du plan de commande et du plan de gestion, exécuter ladite nouvelle version du logiciel du plan de commande et du plan de gestion dans l'état actif, et rafraîchir les données et l'état de données du logiciel du plan d'acheminement ;
dans lequel la récupération de données et d'état de données est mise en oeuvre sur ladite nouvelle version du logiciel sur la carte de ligne, à travers l'unité de commande principale active actuelle, sur la base de l'ensemble de récupération de données de l'unité de commande principale active actuelle, ou la récupération de données et d'état de données est mise en oeuvre sur ladite nouvelle version du logiciel sur la carte de ligne, à travers l'ancienne version du logiciel du plan de commande et du plan de gestion sur la carte de ligne, sur la base de l'ensemble de récupération de données de la carte de ligne.

9. Système de mise à niveau de logiciel pour un dispositif de communication répartie selon la revendication 6, dans lequel la carte de ligne (40) est en outre configurée de manière à, à l'issue de la récupération de données et d'état de données mise en oeuvre sur la carte de ligne, et avant que les données et l'état de données du logiciel du plan d'acheminement ne soient rafraîchis, mettre à niveau le logiciel du plan d'acheminement sur la carte de ligne.

10. Système de mise à niveau de logiciel pour un dispositif de communication répartie selon l'une quelconque des revendications 6 à 9, dans lequel l'unité de commande principale active (20) est en outre configurée de manière à, à l'issue de l'inversion d'état actif / état de veille entre l'unité de commande principale active (20) et l'unité de commande principale de veille (30), mettre à niveau ladite ancienne version du logiciel sur une unité de commande principale active d'origine sur la nouvelle version du logiciel et exécuter la nouvelle version du logiciel dans l'état de veille.
